# EUROPEAN PATENT SPECIFICATION

(11) **EP 0 951 579 B1**
(45) Date of publication and mention of the grant of the patent: **29.01.2003**
(21) Application number: 97928619.2
(22) Date of filing: 10.03.1997
(51) Int. Cl.: C23C 14/22

(54) **METHOD OF MANUFACTURING HOLLOW METAL OBJECTS WITH ELABORATED CAVITIES**
HERSTELLUNG VON KANÄLEN IN METALLKÖRPERN
PROCEDE DE FABRICATION D'OBJETS METALLIQUES CREUX AYANT DES CAVITES ELABOREES

(30) Priority: 12.03.1996 UA 96030948
(43) Date of publication of application: 27.10.1999
(73) Proprietor: UNITED TECHNOLOGIES CORPORATION, Hartford, CT 06101 (US); International Center For Paton Institute, Kiev-5, 252005 (UA)
(72) Inventor: MOVCHAN, Boris B., Kiev, 252004 (UA); KORZH, Alexander V., Kiev, 252933 (UA); TOPAL, Valery, Kiev, 252098 (RU)
(74) Representative: Hall, Matthew Benjamin
(86) International application number: US9703673
(87) International publication number: WO97035678

(56) References cited:
- DE-A- 3 327 218
- GB-A- 2 172 060
- GB-A- 2 252 567
- US-A- 2 641 439
- US-A- 2 696 364
- US-A- 3 091 548
- US-A- 3 407 864
- US-A- 4 287 932
- US-A- 4 574 451
- DATABASE WPI Section Ch, Week 9502 Derwent Publications Ltd., London, GB; Class M13, AN 95-012751 XP002039949 & SU 1 827 396 A (LENGD METAL WKS ET AL.) , 15 July 1993
- DATABASE WPI Section Ch, Week 9502 Derwent Publications Ltd., London, GB; Class M13, AN 95-012754 XP002039950 & SU 1 827 399 A (PATON ELECTROWELDING INST) , 15 July 1993

## Description

### Technical field

This invention concerns methods of manufacturing metal objects with elaborated internal chambers for weight reduction and/or for more effective cooling. Precisely this is a method of manufacturing hollow objects with elaborated cavities such as gas turbine blades, optical systems for powerful lasers, internal combustion chambers, etc., which are widely used in turbine production, automobile and aviation industry and laser manufacture.

### Technical level

Vast numbers of methods exist for manufacturing hollow objects with cavities and channels by means of casting, welding, brazing of identically manufactured parts, and also by plasma jet spraying.

Mechanical pressing with subsequent diffusion welding or brazing of individually manufactured parts presents a high degree of difficulties, particularly for objects with elaborated cavities, while casting methods usually do not allow to produce objects with a wall thickness of less than 1/16 inch (1.6 mm).

USA Patent # 2,676,699 and USA Patent # 4,287,932 suggest the use of molybdenum inserts to produces cast metal objects with channels. The molybdenum is removed from the finished article by heating it to a temperature which is sufficient to oxidize the molybdenum and to sublimate the formed oxide. The result are hollow channels of a given shape that are formed instead of the molybdenum insert. These operations cannot be performed simultaneously however and the process requires several stages.

USA Patent # 3,407, 864 suggests using a core, particularly one made of pressed and baked salt, positioned instead of the cavity in the formed object, assuming that the salt can be easily removed by dissolution in water.

USA Patent # 2,641,439 and USA Patent # 2,696,364 suggest filling cavities and channels by using materials such as aluminum, which can be alkaline-washed with caustic soda, cadmium which can be sublimated by heating, wax with graphite, and other easily melted materials.

West German Patent # 3327218.2 suggests constructing a turbine blade from a longitudinal member and a brazed shell. The shell consists of a layer of metallic felt and a layer of ceramic material which is plasma jet sprayed on its outer surface.

United Kingdom Patent Application 2172060A considers the integral construction of turbine disks with hollow blades. The blades are manufactured from sheet metal with subsequent brazing, flame spraying or plasma jet spraying. This method allows to create the shell from alloys, ceramics and multilayer metal-ceramic plating. Filling the grooves with temporary materials which are later removed by alkaline washing is also considered.

Some information exists about the possibilities of cathode-ray application of various types of plating to improve the properties of the products and to manufacture blades with a developed cooling channel system (Vestnik Academy of Science, USSR # 7, 1985, p. 29). However the information does not provide any method of producing hollow metal objects with elaborated cavities.

The closest method of manufacturing hollow metal objects with elaborated cavities is described by USA Patent # 4,574,451. We used it as a prototype. This method assumes the use of so-called sacrificial (expendable) material to produce objects with channels by shaping the sacrificial material as the future channels, plasma jet spraying it to form the body of the object from the desired material and then removing the sacrificial material. Realizing this method suggests manufacturing the framework of an alloy, with grooves and pockets on the outer surface which correspond to the desired internal measurements of the finished product, filling the grooves and pockets with easily removed material by means of plasma jet spraying, creating an outer shell of the desired thickness and then removing the expendable filler, followed by a thermoplastic treatment.

The above-mentioned methods, including the one described in USA Patent # 4,574,451, allow manufacturing objects with relatively wide and straight channels. The system of cooling channels with many branches and the narrow channels used most often in practice cannot be manufactured with the above-mentioned methods, because the suggested washing methods and the chemical removal of sacrificial material do not remove them from the long and narrow channels of the branched system, and the melting or sublimation of the sacrificial material into the surrounding material has very limited application due to the difficult choice of materials, which should have a much lower melting point and must not change the chemical composition of the base material and deteriorate its mechanical properties.

In addition superalloy castings with very high mechanical strength are presently used for the blade material. Only homogeneous plating of a high-temperature strength alloy can be obtained with plasma jet spraying as described in USA Patent # 4,574,451, however the plating will be substantially inferior to the superalloy casting in regard to its physico-mechanical properties because of defects (such as pores or surface irregularities and nonmetallic impurities) and the inability to ensure the necessary internal structure. To produce the desired internal structure and the mechanical properties of the plating, the plating material must undergo a complex thermo-mechanical treatment which cannot be carried out using superalloys as the base material for the blade framework with directed crystallization or a monocrystalline structure. Finally the above-mentioned methods cannot always provide a sufficiently strong linkage between the plating and the framework material.

### Essence of the invention

The task of this invention is based on improving the manufacture of hollow objects with elaborated cavities by the application of cathode-ray spraying which may allow to obtain covers of the desired thickness not only from homogeneous materials, but also by varying multilayered and microlayered condensed materials of a complex composition which can approach the base material of the framework by its structure and main physico-mechanical properties. A thin layer of easily melted metal or of a material that is able to develop eutectic low-temperature with the sprayed material should be presprayed on the outer surface of the framework in order to decrease coating defects due to surface roughness. An improvement can also be obtained by using easily removed material which can sublimate at the time the product is thermally treated.

The problem is solved by the suggested method of manufacturing hollow objects with elaborated cavities which includes: the prefabrication of the alloy framework to provide the necessary structural strength, with grooves, channels and/or pockets on the outer surface which correspond to the given internal dimensions of the product; filling the grooves and/or pockets with easily removed material by means of spraying or as a dross; creating coatings of the desired thickness; removing the easily removed filler material from the channels; a thermoplastic treatment where the coating of the desired thickness is created by means of the cathode-ray spraying method starting with the initial thin layer of easily melted metal, or a material able to develop eutectic low-temperature with subsequently sprayed material, and sublimating the easily removed filler during the thermal treatment of the product.

The realization of this method allows to manufacture hollow objects of any desired complexity, to produce non-separating links of any shape with internal channels for highly effective cooling, and/or cavities for weight reduction. A multilayered or gradually varying structure is formed by vacuum cooling every layer.

It is useful to form the coating one layer at a time to create a multilayered or gradually varying cover with the desired chemical composition and physico-mechanical properties. A subsequent thermoplastic treatment can create a coating of the desired stable structure and a homogeneously layered or gradually varying composition. With this method of manufacturing hollow objects with elaborated cavities, the cathode-ray spraying is responsible for the ability to create thick coatings of the desired thickness not only from homogeneous materials, but also from gradually varying multilayered and microlayered condensed materials with complex structures which are able to approach the base material of the framework with respect to structure and main physico-mechanical properties. The preliminary spraying of the framework with a thin layer of easily melted metal, or a material that is able to develop eutectic low-temperature with the sprayed material allows to cover micro-defects, reduces the roughness of the internal surfaces of pockets and channels, and increases the adhesive strength of the link between the coating and the framework.

It is advisable to use chlorides or fluorides and/or their mixtures as a base for the easily removed material, where the composition depends on the working temperature of the coating. Active and inactive additives can be mixed in to improve the mechanical and thermal properties of the mixtures and to modify the structure and the properties of the internal surfaces of the channels during the spraying and the thermoplastic treatment. The use of materials which are able to sublimate at the time of the thermal treatment allows to create the desired branched system of narrow cooling channels.

### Brief description of the drawings

The invention is illustrated below by several examples of its practical application and drawings where:
- Figure 1: is a sketch of a hollow object (gas turbine blade) with channels and a coating which can be manufactured using the method of the invention claimed in this article (in cross section).
- Figure 2: clarifies the application of the method to obtain a coating on rotating bodies and flat disk-like objects.
- Figure 3: is a sketch of a fragment of framework for manufacturing hollow compressor blades with blind bores on the outer blade surface (in cross section).

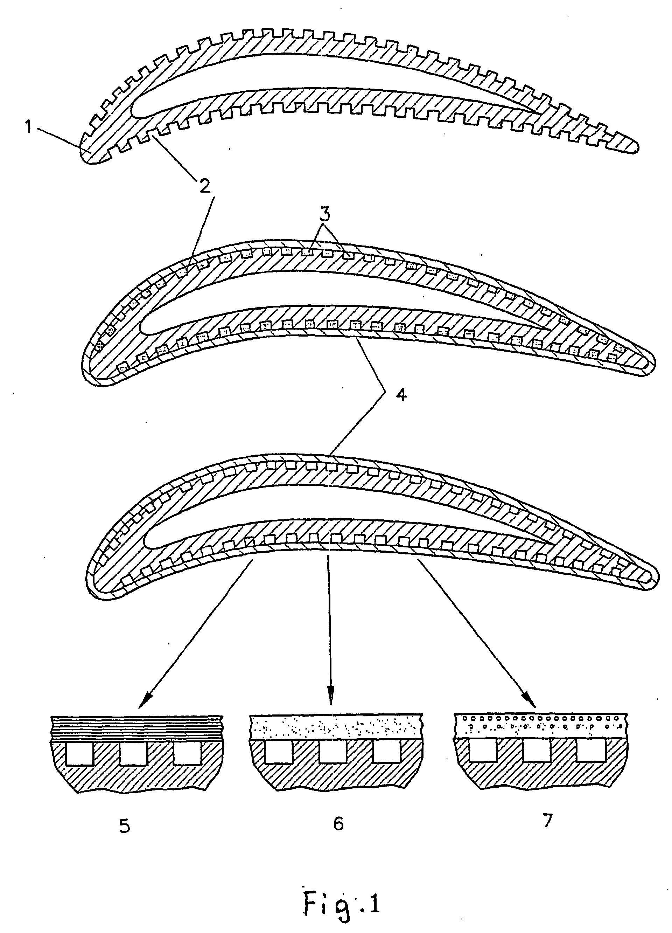

A detailed description of the claimed invention method of manufacturing hollow objects with elaborated cavities is provided below and refers to figures 1, 2, 3, as necessary.

### Detailed description of the invention

The essence of the suggested method is as follows. According to the invention (figure 1), hollow objects with elaborated cavities are manufactured by cathode-ray sublimation with later condensation from the gas phase on the framework 1, which has a cooling channel system and/or weight reducing cavities 2 that are produced on its surface and are filled with easily removed material.

The base material of the framework can be any alloy which can provide the necessary strength to the structure. The cathode-ray method should be applied to cover the framework with a metal, ceramic or metal-ceramic coating 4, which has the desired complex of physico-mechanical properties.

Filling the channels and pockets on the framework with easily removed material can take place with one of the available methods: flame or plasma jet spraying, or in the form of paste or dross with a subsequent mechanical treatment (to fill deep and narrow channels as well as large pockets). In the case of a dross water solution of an alumino-chromo-phosphate binder, a sodium silicate solution (water glass), sodium meta-aluminate or other nonorganic binders should be added to the dry powder mix. The amount of the binder depends on its type and should provide the necessary strength and malleability.

The easily removed aggregate fills all the channels and pockets on the surface of the framework, level with the channel ridges. If the used filler is in a pastelike form, any excess should be mechanically removed after the paste has dried, so that the channel ridges are completely clean.

Chlorides, fluorides and their mixture can be chosen as the base of the filler compound depending on the required temperature at the time of the coating to achieve an adhesive bond between the framework and the sprayed material and to obtain a dense equiaxial structure of the sprayed coating. The sublimation temperature must exceed the coating temperature by 50 to 100° C.

In addition to the selected salt, the filler compound may contain active and inactive additives such as: powdered aluminum, yttrium, boron, carbon, etc. and their mixers in the form of powder or fibers. The additives can improve the mechanical, thermal and heat-transferring properties of the compound. They can also modify the structure and the properties of the internal layers of the coating. The ratio of additives to salt can reach 10% and depends on the channel width and the coefficient of thermal expansion of the base material. The principal purpose of the additives is to increase the coefficient of thermal expansion of the salt.

As a rule the coating contains a substantial number of defects, particularly at the juncture of the channel ridge walls and the filler compound. Therefore one layer of a nonhomogeneous structure and composition should be initially sprayed. Depending on the requirements of the final product after the corresponding thermal and/or mechanical treatment, this layer becomes a coating of the necessary thickness with a given stable structure arid composition, and can be homogeneous as 5, gradually varying as 6 or multilayered as 7 in figure 1.

In multilayered compositions, every layer has its own purpose to carry out its functional load; it may have a different structure and be gradually varying, homogeneous or microlayered in itself.

The application of the cathode-ray spray methods allows the easy manufacture of microlayered metal, metal-ceramic or even ceramic compounds with the desired materials and thicknesses. It should be pointed out that the microlayered configuration can be transformed into a homogeneous structure by thermoplastic treatment or remain microlayered with the desired complex of physico-mechanical properties.

The sprayed material 4 forms the outer surface of the final product and is attached by strong adhesion to the ridges of the channels in the framework. When the spraying is completed, the filler material is removed from the formed channels by sublimation from the solid state at the time of the thermal treatment in vacuum through technological openings of any size and length, in this way forming the cooling channel system or the weight reducing cavities.

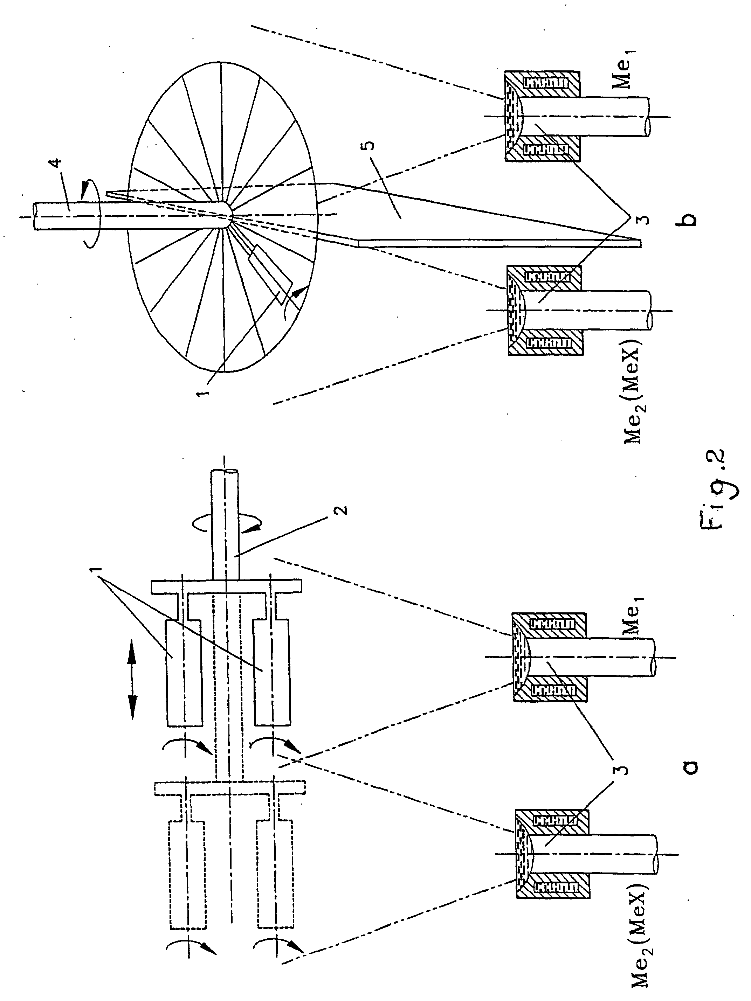

Depending on the size of the objects, their shape and the required number, the coating can be applied by using two major techniques (figure 2):
a - Rotating symmetrical bodies, such as for example gas turbine blades 1, can be placed on the horizontal shaft 2. Several sources of sublimation 3 can be used for different materials.
b - Flat disk-like objects as well as rotating symmetrical bodies can be placed on the vertical shaft 4.

In the first case, the application of multilayered and gradually varying coatings is best, the second case is preferably used for gradually varying and microlayered structures. Partition 5 may be used for microlayered structures where sprayed materials are deposited by turns on rotating objects, producing microlayered structures with a layer thickness that depends on the deposition rate and the rotational velocity.

### Examples of the practical application of the invention

This invention is oriented towards the manufacture of objects with elaborated internal cooling cavities or the manufacture of light-weight construction operating under extreme high and extra-high temperature conditions and alternating loads. The invention was developed for manufacturing a broad range of objects from different materials which require a high degree of effective cooling and/or weight reduction, such as for example blades or vanes of compressors and aviation engine gas turbines, aviation and rocket engine nozzles, reflectors for powerful laser systems, etc.

Any alloy that assures constructive strength can be used to form the framework. The surface of this framework should have the grooves, pockets and technological channels of the desired size and configuration prefabricated by one of the well known methods such as precision casting, mechanical or electrical erosion.

These channels and pockets are filled with the mixture which is prepared in advance. The content of the mixture and the filling method depends on the framework material (table 1) and the outer shell material respectively, and on the geometric dimensions of the channels and cavities. In some cases it is advisable to spray the filler mixture by means of flame or plasma jet, and in some cases of narrow and deep channels in a dross manner.

Chlorides, fluorides and their mixtures can be used as the base of the aggregate mixture, which can be sublimated in vacuum by heating to the corresponding temperature. To manufacture blades of nickel superalloys for example, sodium fluoride with a sublimation temperature of 850°C can be used as a rule, or 980° C magnesium fluoride, or 900° C double salt of sodium and magnesium fluorides.

Lithium fluoride can be used for the titanium alloys, sodium chloride is best for copper. The starting sublimation temperatures for these materials in vacuum are 750° C and 700° C respectively.

When using the cathode-ray method, a coating of the required thickness is sprayed on the framework to produce an integral link with the ridges of the channels.

To eliminate defects in the coating, a thin layer of an easily melted metal can be applied, or a material which can develop into a eutectic alloy with the material to be applied. This easily liquefied layer melts under the coating temperature to fill all the microdefects. Table 2 provides some examples of easily melted materials used for different framework materials such as aluminum, or aluminum-yttrium, which together with the sprayed nickel produce a low-temperature yttrium-nickel at the eutectic temperature of 960° C. The suggested method allows obtaining a good adhesive bond between the framework and the coating materials.

### Example #1

### Manufacture of a blade with a cooling channel system by means of multilayered functional plating

The suggested invention allows to obtain objects of the type of a gas turbine blade with an elaborated well-developed system of interwall cooling. The technological strategy is as follows:
1. The surface of the blades by means of the casting or electro-erosion method and optimum geometric dimensions and configurations from the heat effectiveness point of view.
2. The channels are filled with an easily removable paste based on double salt of sodium and magnesium fluoride. Water soluble sodium meta-aluminate is used as a binder.
3. The dried paste is thoroughly sanded until the ridges of the channels are clean and the surface is smooth.
4. The cathode-ray method is applied for multilayer coating with:
   a) an internal damping layer of Ni-15Fe-20Cr-3Al-Y δ = 50-70 mKm (50-70 microns)
   b) a load-bearing layer with high-temperature strength of Ni-10Co-20Cr-5Al-10Mo-Y, δ = 120-200 mKm (120-200 microns);
   c) a heat-resistant layer of Ni-20Cr-11Al-Y, δ = 50-70 mKm (50-70 microns);
   d) an outer thermal barrier layer of ZrO₂-8% Y₂O₃, δ = 120-150 mKm (120-150 microns)
5. After each layer is sprayed, the item undergoes a thermo-mechanical treatment. The main task of the thermal treatment after the first layer is to remove the filler material, the main task of the following thermo-mechanical treatment is to consolidate the microstructure by applying micro-bearings, (bombarding with micro-balls or spheres) and relieving the residual stress.

### Example #2

The framework is prepared and the channels of the blade are filled in the same way as in example #1. In this case the filler mixture is based on powders with the following contents: magnesium fluoride - 95% by weight, the alloy Al- 20Y - 5% by weight. The excess of the aggregate is mechanically cleaned.

The initial layer of yttrium or aluminum-yttrium is sprayed on the thus prepared surface by means of the cathode-ray method at a temperature of 800-850° C. After that the temperature is sharply increased to 950-970° C before the coating is started. To create the high-temperature strength coating at a high temperature, the nickel matrix is additionally alloyed (doped) with refractory metals (molybdenum, niobium, hafnium) by sublimation from a separate source (strategy 2b). Alternating layers of the nickel matrix and the refractory additive have an optimum thickness ratio of 1.5 : .3 mKm (1.5 : .3 (microns)). This structure is meta-stable and can be converted into a homogenous thermostable composition with a high-temperature vacuum treatment.

To increase the refractoriness, the inner and outer layers of the coating are sprayed without easily melted additives.

Removal of the filler mixture takes place at the time of the thermal treatment after the coating is formed, at a temperature of 1160° C for 3 hours.

### Example #3

### Manufacture of hollow titanium compressor blades

In response to the currently growing demand for effective gas turbine engines, different methods of manufacturing hollow blades of titanium alloys for fans and compressors are being studied.

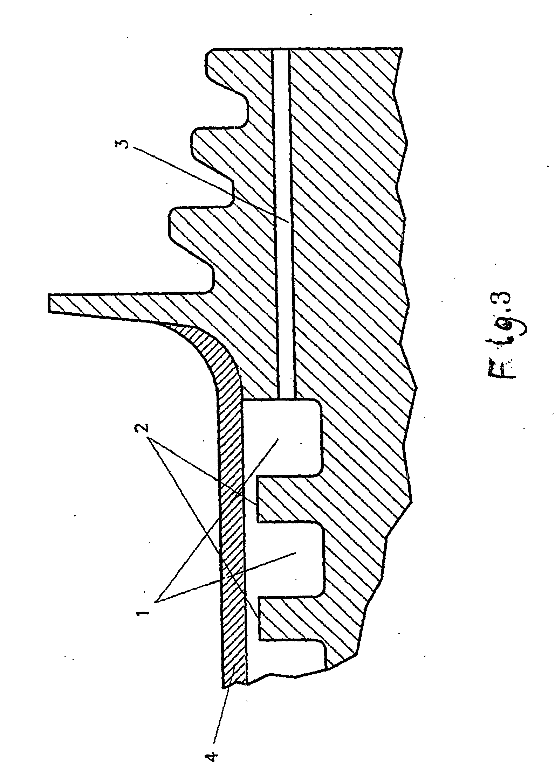

Some hollow compressor blades were manufactured in accordance with the claimed invention. The framework (figure 3), which had the finished form of a compressor blade made of an alloy BT-6 (Ti6Al4V), was drilled on the inside to form several blind drilled holes 1 with a substantial portion of the blade metal being removed (figure 3). The separate cavities were connected by shallow surface grooves 2. At least one of the cavities is connected by longitudinal drilling 3 with the blade-locking piece.

The following compound was prepared as the filler mixture: lithium fluoride as a light volatile component of 95% by weight; powdered aluminum with a particle size of 200 mKm (200 microns) as an inoculant of 5% by weight.

The water glass with a density of 1.17 g/cm3 was added to the powder mixture and the resulting paste was used to fill the channels and pockets. The prepared frameworks were air-dried, fired and polished.

The blades with prepared surfaces are placed in the spraying chamber (figure 2b) in which ingots of the alloy Ti5Al and Al are loaded. The blades are heated to 750° C and coated with the alloy Ti5Al. After the coating reaches about 150 mKm (150 microns) of plastic alloy, the aluminum starts to sublimate and the content of aluminum is increased in accordance with the intended program to 14% by weight, which corresponds to the intermetallic compound Ti3Al with a thickness of 50-80 mKm (50-80 microns).

The blade with the coating 4 is thermally treated in vacuum at 940° C for one hour, which causes the sublimation of the filler mixture and the elimination of the vapors through the channel. Aluminum from the filler mixture inoculates the inner surfaces and reduces the roughness. The coating structure is transformed from layered to homogeneous with the gradual transition of the plastic alloy to an intermetallic compound, and becomes thermally stable under the operating temperature of the blade.

This technique does not restrict the size and shape of the channels and cavities, nor the shape and the size of the framework.

### Example #4

### Manufacture of a combustion chamber segment with a highly effectivecooling system

The framework is made of copper alloy, the channels on the surface are filled with the mixture based on sodium chloride, which is dried and sanded as described in the above examples.

The coating is sprayed with the method in figure 2a from two independent sources: one is the sublimation of pure copper, the other of silver. The alternating work creates a multilayered structure which is transformed into a homogeneous composition that contains 4% by weight of silver in copper by means of vacuum firing at 750° C for 3 hours.

To obtain a good structure without defects, the thin layer of pewter or aluminum is initially plated. This layer vanishes almost completely after the thermal treatment.

**Table 1 -**

| **Composition of easily removed filler materials** | | |
|---|---|---|
| Framework material | Salt | Sublimation temperature |
| Nickel alloys | NaF | 850° C |
| | MgF₂ | 980° C |
| | NaF-MgF₂ | 900° C |
| Titanium alloys | LiF | 750° C |
| Copper alloys | NaCl | 700° C |

**Table 2 -**

| **Composition of the initial thin metal layer** | |
|---|---|
| Nickel alloys | Al, Al-20%Y, Al-10%Si, Al alloys |
| Titanium alloys | Al, Al alloys |
| Copper alloys | Al, Sn, Al alloys, Sn alloys |

## Claims

1. A method of manufacturing a hollow object with elaborated cavities, comprising the steps of:
prefabricating an alloy framework to provide the necessary structural strength,'the framework having grooves, channels and/or pockets on its outer surface, which correspond to the internal dimensions of the finished object;
filling the grooves, channels and/or pockets with an easily removed filler material by spraying or as a paste or dross;
applying a coating to the framework and the filler material;
removing the filler material; and
performing a thermal treatment on the object,
the method being **characterised in that** the coating is applied by a cathode-ray spraying method in which an initial thin layer of easily melted metal or a material able to develop a low temperature eutectic composition with a subsequently sprayed material is applied before an outer shell of the coating is formed, and **in that** the filler material is removed by sublimation at the time of the thermal treatment.

2. A method as claimed in claim 1, wherein the outer shell of the coating is a homogeneous material.

3. A method as claimed in claim 1, wherein the outer shell of the coating is a multi-layered material.

4. A method as claimed in claim 1, wherein the outer shell of the coating is of gradually varying composition.

5. A method as claimed in any preceding claim, wherein chlorides and/or fluorides are used as the base of the filler material.

## Patentansprüche

1. Verfahren zum Herstellen eines hohlen Gegenstandes mit raffinierten Hohlräumen, aufweisend die folgenden Schritte:
Vorfabrizieren eines Legierung-Unterbaus, um die erforderliche strukturelle Festigkeit zu schaffen, wobei der Unterbau Nuten, Kanäle und/oder Taschen an seiner äußeren Oberfläche aufweist, welche den inneren Dimensionen des fertigen Gegenstands entsprechen;
Füllen der Nuten, Kanäle und/oder Taschen mit einem leicht entfernbaren Füllmaterial durch Sprühen oder als eine Paste oder Aufschlämmung;
Aufbringen einer Beschichtung auf den Unterbau und das Füllmaterial; Entfernen des Füllmaterials; und
Durchführen einer Wärmebehandlung an dem Gegenstand,
wobei das Verfahren **dadurch gekennzeichnet ist, dass** die Beschichtung durch ein Kathodenstrahl-Sprühverfahren aufgebracht wird, bei dem eine dünne Anfangsschicht eines leicht schmelzenden Materials oder eines Materials, das in der Lage ist, eine Niedrig-Temperatur-Eutaktikum-Zusammensetzung mit einem anschließend aufgesprühten Material zu entwickeln, aufgebracht wird, bevor eine äußere Schale der Beschichtung gebildet wird, und dass das Füllmaterial durch Sublimation während der Wärmebehandlung entfernt wird.

2. Verfahren nach Anspruch 1, wobei die äußere Schale der Beschichtung ein homogenes Material ist.

3. Verfahren nach Anspruch 1, wobei die äußere Schale der Beschichtung ein mehrlagiges Material ist.

4. Verfahren nach Anspruch 1, wobei die äußere Schale der Beschichtung von allmählich sich ändernder Zusammensetzung ist.

5. Verfahren nach einem der vorangehenden Ansprüche, wobei Chloride und /oder Fluoride als Basis des Füllmaterials verwendet werden.

## Revendications

1. Procédé de fabrication d'un objet creux ayant des cavités élaborées, comprenant les étapes consistant à :
préfabriquer une ossature en alliage pour donner la résistance de structure nécessaire, l'ossature possédant des rainures, des stries et/ou des alvéoles sur sa surface extérieure, qui correspondent aux dimensions intérieures de l'objet fini ;
remplir les rainures, stries et/ou alvéoles avec une matière de remplissage qu'on peut enlever facilement par pulvérisation ou sous forme de pâte ou de gangue ;
appliquer un revêtement sur l'ossature et la matière de remplissage ;
enlever la matière de remplissage ; et
faire un traitement thermique sur l'objet,
le procédé étant **caractérisé en ce que** le revêtement est appliqué par un procédé de pulvérisation par rayons cathodiques dans lequel une couche initiale mince d'un métal facile à fondre, ou une matière susceptible de former un composé eutectique basse température avec une matière pulvérisée par la suite, est appliquée avant qu'une coquille extérieure du revêtement ne soit formée, et **en ce que** la matière de remplissage est enlevée par sublimation au moment du traitement thermique.

2. Procédé selon la revendication 1, dans lequel la coquille extérieure du revêtement est une matière homogène.

3. Procédé selon la revendication 1, dans lequel la coquille extérieure du revêtement est une matière multicouches.

4. Procédé selon la revendication 1, dans lequel la coquille extérieure du revêtement est de composition progressivement variable.

5. Procédé selon l'une quelconque des revendications précédentes, dans lequel des chlorures et/ou fluorures sont utilisés comme base de la matière de remplissage.
